(19) Europäisches Patentamt
European Patent Office
Office européen des brevets

(11) Publication number: 0 373 921 A2

# (12) EUROPEAN PATENT APPLICATION

(21) Application number: 89313049.2

(22) Date of filing: 13.12.89

(51) Int. Cl.5: H04N 1/32

(30) Priority: 13.12.88 JP 315834/88

(43) Date of publication of application: 20.06.90 Bulletin 90/25

(84) Designated Contracting States: DE GB

(71) Applicant: SHARP KABUSHIKI KAISHA
22-22 Nagaike-cho Abeno-ku
Osaka 545(JP)

(72) Inventor: Hayashi, Motohiko
109-21 Wakatsuki-cho
Yamato-Koriyama-shi Nara-ken(JP)

(74) Representative: Brown, Kenneth Richard et al
R.G.C. Jenkins & Co. 26 Caxton Street
London SW1H 0RJ(GB)

## (54) A facsimile telegraph having a telephone function.

(57) A facsimile telegraph adapted to be coupled to a first telephone line and a second telephone line and having a telephone function, includes: a facsimile unit for sending and receiving image data via the first telephone line; a telephone unit for sending and receiving voice signals via the first or second telephone line; a change over switch for coupling the facsimile unit and the telephone unit to the first and second telephone lines selectively according to a supplied control signal; and a control unit for supplying a control signal to the change-over switch.

The change-over switch couples the telephone unit to the second telephone line when a telephonic communication by the telephone function is requested in a case where the facsimile unit is coupled to the first telephone line, and couples the telephone unit to one of the first and second telephone lines when a telephonic communication by the telephone function is requested in a case where the facsimile unit is not coupled to the first telephone line.

EP 0 373 921 A2

Xerox Copy Centre

# A FACSIMILE TELEGRAPH HAVING A TELEPHONE FUNCTION

## BACKGROUND OF THE INVENTION

### 1. Field of the Invention:

The present invention relates to a facsimile telegraph having a telephone function.

### 2. Description of the Related Art:

A conventional facsimile telegraph having a telephone function is connected to one telephone line, and the telephone unit and the facsimile unit thereof share the one telephone line in common. Accordingly, the facsimile function and the telephone function cannot be used at the same time. For example, while image information is being sent or received using the facsimile function, a telephonic communication using the telephone function cannot be achieved. Conversely, while it is being used as a telephone set using the telephone function, a facsimile transmission from another facsimile telegraph cannot be received.

The present invention has been devised in light of the above-described points.

## SUMMARY OF THE INVENTION

An object of the present invention is to provide a facsimile telegraph capable of using the facsimile function and the telephone function thereof at the same time.

The object of the invention can be achieved by a facsimile telegraph adapted to be coupled to a first telephone line and a second telephone line and having a telephone function, comprising: facsimile means for sending and receiving image data via said first telephone line; telephone means for sending and receiving voice signals via said first or second telephone line; switching means for coupling said facsimile means and said telephone means to said first and second telephone lines selectively according to a supplied control signal; and control means for supplying a control signal to said switching means in order that said switching means couples said telephone means to said second telephone line when a telephonic communication by said telephone function is requested in a case where said facsimile means is coupled to said first telephone line, and couples said telephone means to one of said first and second telephone lines when a telephonic communication by said telephone function is requested in a case where said facsimile means is not coupled to said first telephone line.

According to the present invention, a facsimile telegraph having a telephone function can be used as a telephone set while it is receiving or transmitting a facsimile message. Further, while it is being used as a telephone set, a facsimile message from another facsimile apparatus cen be received. The simultaneous used of the facsimile function and the telephone function incorporated in the facsimile telegraph brings about a remarkable improvement in efficiency of communication.

Further objects and advantages of the present invention will be apparent from the following description, reference being had to the accompanying drawings wherein preferred embodiment of the present invention are clearly shown.

## BRIEF DESCRIPTION OF THE DRAWINGS

Fig. 1 is a block diagram of a conventional facsimile telegraph adapted to be connected to a single telephone line;

Fig. 2 is a block diagram of a facsimile telegraph of one embodiment of the present invention;

Fig. 3 is an explanatory view of the change-over switch SW1 of the facsimile telegraph of Fig. 2; and

Fig. 4 is a flow chart for explaining the operation of the facsimile telegraph of Figure 1.

## DESCRIPTION OF THE PREFERRED EMBODIMENT

Prior to explaining the embodiment of the present invention, a facsimile telegraph adapted to be connected to a single telephone line and having a telephone function will be explained.

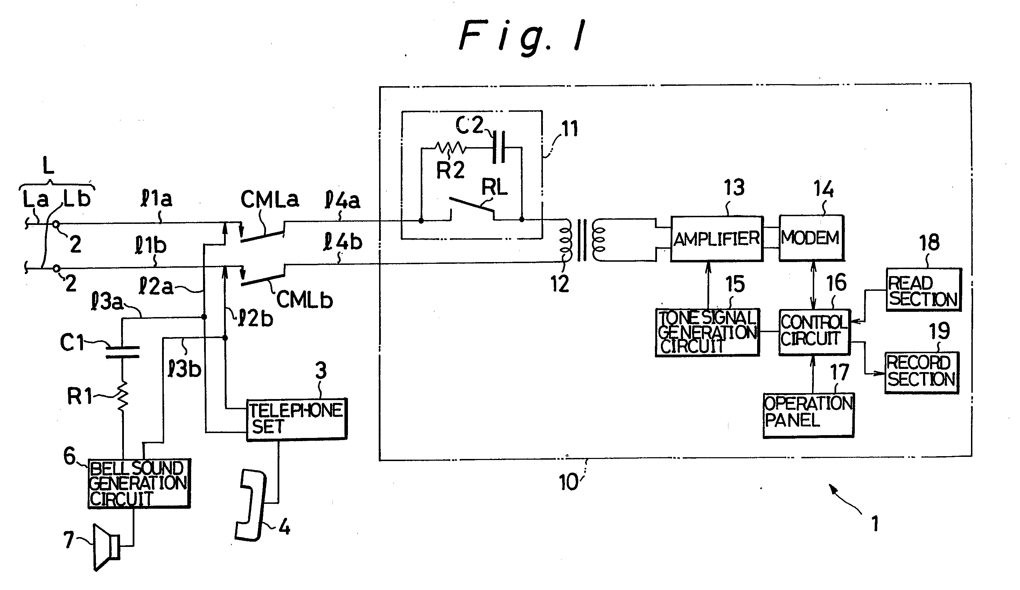

As shown in Fig. 1, a facsimile telegraph 1 is connected to a telephone line L via a modular jack 2. The facsimile telegraph sends or receives image information via the telephone line L. The facsimile telegraph 1 is equipped with a telephone unit 3 and a handset 4 in order to realize the telephone function. The facsimile telegraph 1 comprises a facsimile unit 10, the telephone unit 3, and a bell sound generation circuit 6. Two lines La, Lb of the telephone line L are respectively connected to lines ℓ1a, ℓ1b of the facsimile telegraph via the modular jack 2. The lines ℓ1a, ℓ1b are connected to lines ℓ4a, ℓ4b or lines ℓ2a, ℓ2b by switching relays CMLa, CMLb.

The lines ℓ4a, ℓ4b are connected to the facsimile unit 10, and the lines ℓ2a, ℓ2b are connected to the telephone unit 3. The handset 4 is connected to the telephone unit 3 to realize the telephone function. Lines ℓ3a, ℓ3b are connected to the lines ℓ2a, ℓ2b, and the line ℓ3b is connected to the bell sound generation circuit 6. The line ℓ3a is connected to the bell sound generation circuit 6 via a capacitor C1 and a resistor R1. A speaker 7 sounds a bell on receipt of a calling signal by the output from the bell sound generation circuit 6.

The facsimile unit 10 comprises a dial pulse transmitting circuit 11, a transformer 12, an amplifier 13, a modem 14, a tone signal generation circuit 15, a control circuit 16, an operation panel 17, a read section 18, and a record section 19. To transmit a calling signal from the facsimile telegraph 1, dials or keys provided on the operation panel 17 are operated.

For example, when the telephone line L is a line for dial type telephone sets, the control circuit 16 makes or breaks the relay RL of the dial pulse transmitting circuit 11 by the operation of the operation panel 17 thereby sending a dial pulse signal DP to the lines ℓ4a, ℓ4b. At this time, the switching relays CMLa, CMLb respectively connect the lines ℓ1a, ℓ1b with the lines ℓ4a, ℓ4b. A dial pulse from the dial pulse transmitting circuit 11 is sent to the telephone line L via the lines ℓ1a, ℓ1b and the modular jack 2. To prevent sparks caused by the switching of the relay RL, a resistor R2 and a capacitor C2 are provided on the dial pulse transmitting circuit 11.

When the telephone line L is a line for push-button type telephone sets, by operation of the above-described operation panel 17, the control circuit 16 makes the tone signal generation circuit 15 generate a push-button signal DTMF (dial tone multi-frequency). This push-button signal is amplified by an amplifier 13, and is delivered to the lines ℓ4a, ℓ4b via the transformer 12. At this time, the relay RL of the dial pulse transmitting circuit 11 is in a turn-on state. After this, the push-button signal delivered to the lines ℓ4a, ℓ4b is sent to the telephone line L in the same way as the above-described dial pulse signal.

In the situation where the telephone line L is connected to another facsimile telegraph, an original image is read by the read section 18 including CCDs (Charge Coupled Device) and an original feeding mechanism, and sent as image data. Image processing, such as data compression, is performed on the image data by the control circuit 16. The compressed and coded image data is modulated by the modem 14. The modulated image data is delivered to the lines ℓ4a, ℓ4b via the amplifier 13 and the transformer 12, and is sent to the facsimile telegraph of the other party through the telephone line L in the same manner as the above-described push-button signal.

When the image data from another facsimile telegraph is received through the telephone line L, it is supplied to the modem 14 via the lines ℓ4a, ℓ4b and the transformer 12. The data demodulated by the modem 14 is decoded by the control circuit 16 and printed on a paper by the record section 19 which includes thermal heads arrayed on one line and a recording paper feeding mechanism.

Such facsimile telegraph 1 can also be used as a telephone set by switching the change-over switch (not shown).

The operation of the facsimile telegraph as a telephone set will be explained below.

For transmitting a calling signal from the facsimile telegraph 1, a dial pulse signal or a push-button signal is sent to the telephone line L by the operation of the operation panel 17 as described above. When the telephone line L is connected with a telephone set of the other party, the relays CMLa, CMLb are switched to the state in which the lines ℓ1a, ℓ1b are connected to the lines ℓ2a, ℓ2b respectively. Under this condition, the telephone line L and a telephone unit 3 are connected, thereby enabling a telephonic communication with the handset 4. When the facsimile telegraph 1 is set as a telephone set, the relays CMLa, CMLb are in such a state that the lines ℓ1a, ℓ1b are connected to the lines ℓ2a, ℓ2b. Therefore, when a calling signal is received through the telephone line L, this calling signal is delivered to the lines ℓ3a, ℓ3b via the lines ℓ1a, ℓ1b and the lines ℓ2a, ℓ2b. This calling signal is supplied to the bell sound generation circuit 6 via the capacitor C1, and the resistor R1, and the speaker 7 sounds a bell. At this time, by taking the handset 4 off a predetermined position, the connection between the telephone line L and the telephone section 3 is made, thereby enabling a telephonic communication.

The facsimile telegraph having the above-described construction has a drawback that the facsimile function and the telephone function cannot be used simultaneously as mentioned above.

An embodiment of the facsimile telegraph of the present invention having a telephone function will now be described below.

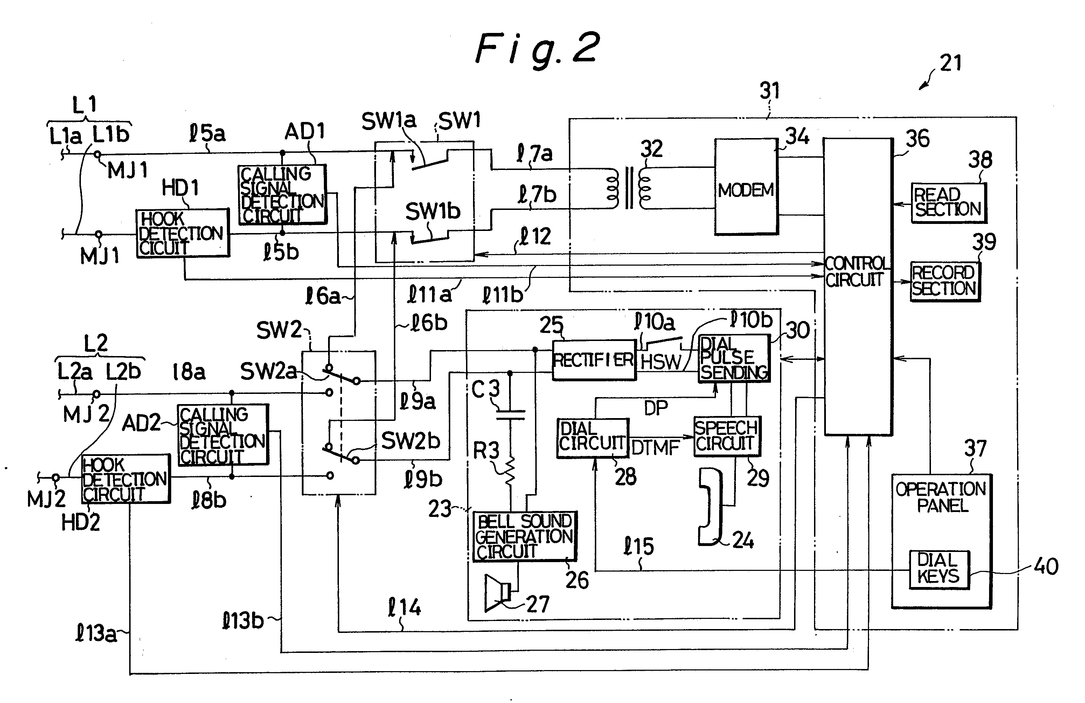

As shown in Fig. 2, facsimile telegraph 21 of this embodiment comprises a telephone unit 23, a facsimile unit 31, and change-over switches SW1, SW2. And it is connected to the telephone line L1 (a first telephone line) and the telephone line L2 (a second telephone line).

The telephone line L1 comprises two lines L1a, L1b. The lines L1a, L1b are respectively connected to lines ℓ5a, ℓ5b of the facsimile telegraph 21 via a modular jack MJ1. A hook detection switch HD1 for detecting whether or not communication using the telephone line L1 is being made is provided on the line ℓ15b. A calling signal detection circuit AD1 for detecting an incoming calling signal via the telephone line L1 is provided between the lines ℓ5a, ℓ5b. Each of the signals from the hook detection circuit HD1 and the calling signal detection circuit AD1 is supplied to the control circuit 36 via lines ℓ11a, ℓ11b.

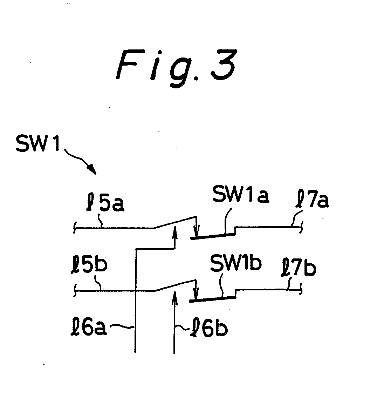

The lines ℓ5a, ℓ5b are selectively connected to lines ℓ7a, ℓ7b or lines ℓ6a, ℓ6b by the switch SW1. The switch SW1 comprises two relays SW1a, SW1b interlocked with each other. In the state shown in Fig. 2, the relay SW1a connects the line ℓ5a with the line ℓ6a, and the relay SW1b connects the line ℓ5b with the line ℓ6b. When facsimile transmission is made, the relay SW1a connects the line ℓ5a with the line ℓ7a, and the relay SW1b connects the line ℓ5b with the line ℓ7b as shown in Fig. 3. The lines ℓ7a, ℓ7b are connected to the facsimile unit 31, and the lines ℓ6a, ℓ6b are connected to the change-over switch SW2. The other telephone line L2 comprises two lines L2a, L2b. The lines L2a, L2b are respectively connected to lines ℓ8a, ℓ8b of the facsimile telegraph 21 via a modular jack MJ2. A hook detection circuit HD2 for detecting whether or not communication using the telephone line L2 is being made is provided on the line ℓ8b. A calling signal detection circuit AD2 for detecting an incoming calling signal via the telephone line L2 is provided between the lines ℓ8a, ℓ8b. Each of the signals from the hook detection circuit HD2 and the calling signal detection circuit AD2 is supplied to the control circuit 36 via the lines ℓ13a, ℓ13b. The lines ℓ8a, ℓ8b are connected to the change-over switch SW2. The change-over switch SW2 connects one of the lines ℓ6a, ℓ6b and the lines ℓ8a, ℓ8b to lines ℓ9a, ℓ9b selectively. The change-over switch SW2 comprises two relays SW2a, SW2b interlocked with each other. In the state shown in Figure 2, the relay SW2a connects the line ℓ6a with the line ℓ9a, and the relay SW2b connects the line ℓ6b with the line ℓ9b. In the facsimile telegraph 21, when the telephone function is used, the relay SW2a connects the line ℓ8a with the line ℓ9a, and connects the line ℓ8b with the line ℓ9b. The lines ℓ9a, ℓ9b are connected to the telephone unit 23. The change-over switch SW2 is controlled by a control signal from the control circuit 36 through a line ℓ14.

The facsimile unit 31 comprises the above-described control circuit 36, a transformer 32, a modem 34, a read section 38, a record section 39 and an operation panel 37. The read section 38, for example, includes CCDs and an original feeding mechanism. The read section 38 reads an original and outputs its image data to the control circuit 36. The control circuit 36 performs an image processing, such as data compression, on the image data, thereby coding the image data, and outputs the data to the modem 34. The image data is modulated by the modem 34 and delivered to the lines ℓ7a, ℓ7b via the transformer 32.

On the other hand, image data received from another facsimile telegraph is supplied to the lines ℓ7a, ℓ7b and demodulated by the modem 34 via the transformer 32. The control circuit 36 decodes the demodulated image data and outputs it to the record section 39. The record section 39, for example, includes heating elements arrayed on one line, and a recording paper feeding mechanism. The record section 39 prints out an image thermally on the basis of the output of the control circuit 36. When the above-described facsimile function is used, the change-over switch SW1 is in the state shown in Fig. 3 to use the telephone line L1.

To achieve such facsimile function, key switches are provided on the operation panel 37. By operation of the key switches on the operation panel 37, the control circuit 36 performs various controls. The dial key 40 provided on the operation panel 37 for transmitting a calling signal is connected to the dial circuit 28 of the telephone unit 23 via a line ℓ15.

In order to realize the telephone function, the telephone unit 23 includes a speech circuit 29, a bell sound generation circuit 26, a speaker 27 and a hand set 24, the dial circuit 28, a dial pulse transmitting circuit 30, and a rectifying circuit 25 for outputting a dial pulse signal and a push button signal DTMF (dial tone multi-frequency). The line ℓ9a from the above-described switch SW2 is connected to the rectifying circuit 25 and to the bell sound generation circuit 26. The line ℓ9b is connected to the rectifying circuit 25 and to the bell sound generation circuit 26 via a capacitor C3 and a resistor R3, which are connected in series.

The bell sound generation circuit 26 activates the speaker 27 to sound a bell as a calling tone when a calling signal from another facsimile telegraph or a telephone set, through the telephone line L1 or the telephone line L2, is applied to the lines ℓ9a, ℓ9b.

The rectifying circuit 25 is connected to the dial pulse transmitting circuit 30 via lines ℓ10a, ℓ10b. A hook switch HSW is provided on the line ℓ10a. When the handset 24 is taken off a predetermined position, the rectifying circuit 25 and the dial pulse transmitting circuit 30 are interconnected. The dial pulse transmitting circuit 30 is connected to the speech circuit 29, and the speech circuit 29 is connected with the handset 24.

For transmitting a call signal from the facsimile telegraph 21, a signal generated by the operation of the dial key 40 is supplied to dial circuit 28 via the line ℓ15. The dial circuit 28 has functions for generating a dial pulse signal DP and a push-button signal DTMF. When the telephone lines L1, L2 are lines for dial-type telephone sets, the dial pulse signal DP is supplied to the dial pulse transmitting circuit 30. When the telephone lines L1, L2 are lines for push-button type telephone sets, a push-button signal DTMF is supplied to the speech circuit 29.

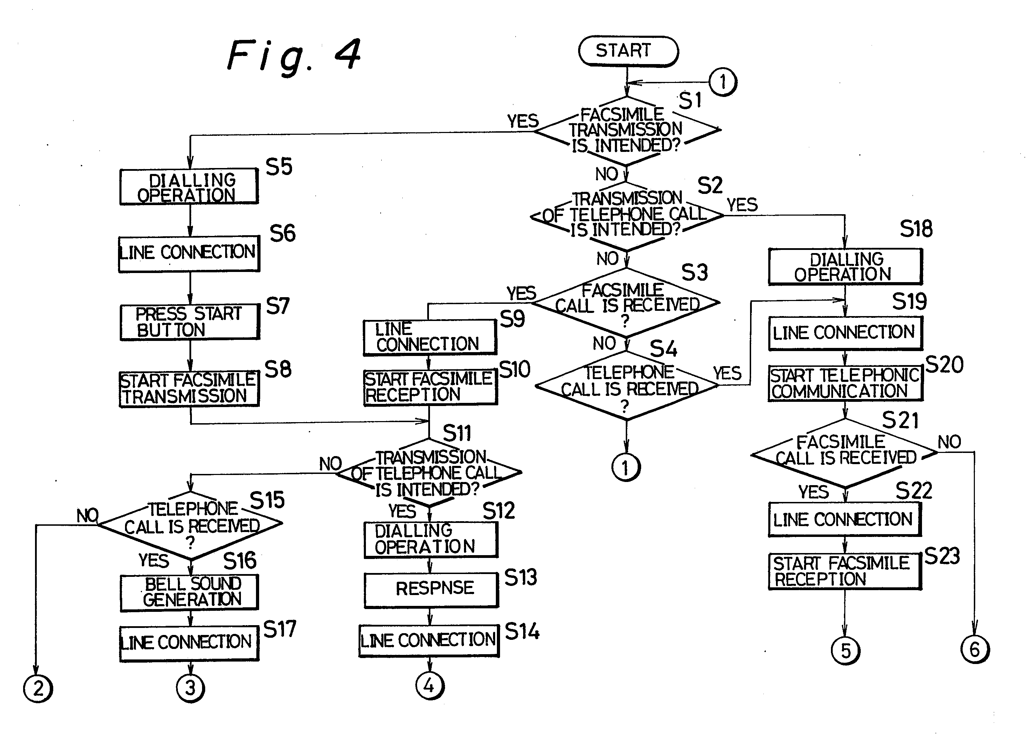

Fig. 4 is a flow chart for explaining the operation of facsimile communication and/or telephone communication by the facsimile telegraph 21. Referring to the flow chart, the operation of the facsimile telegraph of this embodiment will be explained below. When the facsimile telegraph 21 is used, it is judged whether or not facsimile transmission is intended in step S1 firstly. In case of facsimile transmission, the flow goes to step S5, where the hook switch HSW is turned on by performing a predetermined operation for operating the dial key 40. The dial circuit 28 is activated by this operation. When the telephone line L1 is a line for dial-type telephone sets, a dial pulse signal DP is supplied to the dial pulse transmitting circuit 30. When the telephone line L1 is a line for push-button type telephone sets, a push-button signal DTMF is supplied to the speech circuit 29 from the dial circuit 28. Such signals are delivered to the lines ℓ9a, ℓ9b via the rectifying circuit 25 from the dial pulse transmitting circuit 30.

At this time, the switch SW2 connects the lines ℓ9a, ℓ9b with the lines ℓ6a, ℓ6b, and the switch SW1 is in a state as shown in Fig. 2. Therefore, such signals are delivered to the lines ℓ5a, ℓ5b from the lines ℓ9a, ℓ9b via the lines ℓ6a, ℓ6b, and are sent to the lines ℓ1a, ℓ1b of the telephone line L1 as calling signals.

When the facsimile telegraph of the other party responds to the calling signal in step S6, these facsimile telegraphs are engaged with each other. When line connection is made as described above, the switch SW1 is turned to the state shown in Fig. 3. As a result, the facsimile transmission becomes possible either automatically or by pressing a start button (not shown) provided on the operation panel 37 in step S7. The flow proceeds to step S8 under this condition, where the original image read by the read section 38 is sent to the telephone line L1 as image data, and the facsimile transmission using the facsimile function is started.

When the facsimile transmission is not intended in step S1, the flow goes to step S2, where it is judged whether or not telephonic communication is intended. If telephonic communication is not intended, then it is further judged whether or not there is a calling signal from the facsimile telegraph of the other party. When it is detected that the calling signal from the facsimile telegraph of the other party has been received, through the telephone line L1, that is, when a detection signal is outputted from the calling signal detection circuit AD1, the flow proceeds to step S9. Since neither the facsimile function nor the telephone function is used in step S9, the switch SW1 is in the state as shown in Fig. 3, and line connection is made automatically or manually by responding to the incoming calling signal. As a result, reception of image data sent from the other party is enabled. In this way, when the facsimile function is used in steps S8 and S10, that is, even when the telephone line L1 is connected with the facsimile unit 31, the telephone function of the facsimile telegraph 21 can also be used.

In step S11, it is judged whether or not telephonic communication is intended while the facsimile function is in use. When telephonic communication is intended, the flow proceeds to step S15, where it is judged whether or not there has been received a calling signal through the telephone line L2. If there is no calling signal received, only the facsimile transmission or reception started in step S8 or step S10 is continued in the branch ② in Fig. 4.

When there is a reception of a telephone call signal in step S15, the flow goes to step S16 where a bell is sounded. At this time, the control circuit 36 sends a control signal to the switch SW2 in order to connect the lines ℓ8a, ℓ8b with the lines ℓ9a, ℓ9b. By taking off the handset 24 in step S17, the hook switch HSW is turned on, and line connection is made. In this way, in the branch ③, while the facsimile function of the facsimile telegraph 21 is being used, it is possible to receive a telephone call from the other party by the same facsimile apparatus 21, thereby enabling a telephonic communication using the telephone function.

In case of transmitting a telephone call in step S11, the flow goes to step S12 where the same dialing operation as described in step S5 is performed. At this time, since the hook detection circuit HD1 detects that the telephone line L1 is in use, the control circuit 36 makes the switch SW2 connect the lines ℓ8a, ℓ8b with the lines ℓ9a, ℓ9b. As a result, the telephone call can be transmitted to the telephone set of the other party via the telephone line L2. After this, when the other party responds in step S13, the telephone set of the other party and the facsimile telegraph 21 are engaged with each other via the telephone line L2, and telephonic communication is enabled by using the handset 24. In this way, in the branch ④ while the facsimile function of the facsimile telegraph 21 is being used, it is possible to make a telephone call from the same facsimile telegraph 21.

In case of making a telephone call in step S2 under the condition that neither the telephone function nor the facsimile function of the facsimile telegraph 21 is used, the flow goes to step S18. In step S18, the same dialing operation as described in step S5 is performed. As a result, the telephone set of the other party is called.

In this case, since the telephone line L1 is not used, the telephone set of the other party can be called by setting the switches SW1, SW2 to the state shown in Fig. 2 via the telephone line L1. However, it is preferable to set the switch SW2 to such a state that the lines ℓ8a, ℓ8b are connected with the lines ℓ9a, ℓ9b so that the telephone set of the other party is called through the telephone line L2 in that case. With such setting, the facsimile apparatus 21 can respond to a calling signal from the facsimile telegraph of the other party during the use of telephone function thereof.

When the dialing operation is completed in step S18 or a calling signal from the telephone set of the other party is received in step S4, the flow goes to step S19. When there is no reception of a telephone call in step S4, the flow returns to step S1 from the branch ①.

In step S19, the telephone set of the other party and the facsimile telegraph 21 are interconnected via the telephone line L2. As a result, a telephonic communication with the other party can be enabled in step S20.

With the facsimile telegraph 21, the facsimile function can be used while the telephone function is being used. That is, after the telephonic communication is started in step S20, the flow goes to step S21, where, when the calling signal from the facsimile telegraph of the other party is received, the flow goes to step S22. In step S22, since the facsimile function of the facsimile telegraph 21 and the telephone line L1 are not used. the control circuit 36 sets the switch SW1 to the state shown in Fig. 3, thereby connecting the facsimile telegraph 21 with the facsimile telegraph of the other party via the telephone line L1 when the calling signal is detected by the calling signal detection circuit AD1. Thereafter, in step S23, reception of incoming image data is started. In this way, in the branch ⑤, while the telephone function of the facsimile telegraph 21 is being used, the image data from the facsimile telegraph of the other party can be received and the image data can be printed out on a recording paper in the record section 39.

In step S21, if there is no reception of the calling signal via the telephone line L1, only a telephonic communication by the telephone function started in step S20 is continued.

Many widely different embodiments of the present invention may be constructed without departing from the spirit and scope of the present invention. It should be understood that the present invention is not limited to the specific embodiment described in this specification, except as defined in the appended claims.

**Claims**

1. A facsimile telegraph adapted to be coupled to a first telephone line and a second telephone line and having a telephone function, comprising:
facsimile means for sending and receiving image data via said first telephone line;
telephone means for sending and receiving voice signals via said first or second telephone line;
switching means for coupling said facsimile means and said telephone means to said first and second telephone lines selectively according to a supplied control signal; and
control means for supplying a control signal to said switching means in order that said switching means couples said telephone means to said second telephone line when a telephonic communication by said telephone function is requested in a case where said facsimile means is coupled to said first telephone line, and couples said telephone means to one of said first and second telephone lines when a telephonic communication by said telephone function is requested in a case where said facsimile means is not coupled to said first telephone line.

2. A facsimile telegraph according to claim 1, wherein said control means comprises a calling signal detection circuit for detecting a calling signal received via each of said first and second telephone lines, and a hook detection circuits for detecting whether or not said first and second telephone lines are used.

3. A facsimile telegraph according to claim 1, wherein said switching means comprises a first relay having a first state for connecting an input and output line of said facsimile means to said first telephone line and a second state for disconnecting said input and output line of said facsimile means from said first telephone line, and a second relay having a first state for connecting an input and output line of said telephone means to said first telephone line and a second state for connecting said input and output line of said telephone means to said second telephone line.

4. A facsimile telegraph according to claim 1, wherein said control means is adapted to control said switching means so that said telephone means is coupled to said second telephone line when the telephonic communication by said telephone function is requested in a case where said facsimile communication means is not coupled to said first telephone line.

5. A facsimile telegraph according to claim 1, wherein said facsimile means has a read section which comprises CCDs and means for feeding an original to be read, and a record section which comprises heating elements arrayed on one line and means for feeding a thermal recording paper.

6. A facsimile machine including a telephone facility and adapted for external communication via first and second telephone lines, the machine including selectively operable switch means for coupling the telephone facility to the second telephone line when the first line is busy with a facsimile call whereby the machine is capable of handling simultaneous telephone and facsimile calls.

Fig. 1
READ SECTION
RECORD SECTION
MODEM
CONTROL CIRCUIT
OPERATION PANEL
AMPLIFIER
TONE SIGNAL GENERATION CIRCUIT
TELEPHONE SET
BELL SOUND GENERATION CIRCUIT
C2
R2
RL
C1
R1
CMLa
CMLb
ℓ4a
ℓ4b
ℓ2b
ℓ3b
ℓ1a
ℓ1b
ℓ2a
ℓ3a
L
La
Lb
1
2
3
4
6
7
10
11
12
13
14
15
16
17
18
19

Fig. 2
21
31
L1
L1a L1b
MJ1
ℓ5a
AD1
SW1a
SW1
ℓ7a
32
34
36
HD1
CALLING SIGNAL DETECTION CIRCUIT
MODEM
38
ℓ7b
HOOK DETECTION CICUIT
SW1b
READ SECTION
MJ1
ℓ5b
ℓ12
39
CONTROL CIRCUIT
RECORD SECTION
ℓ6a
ℓ11a
ℓ11b
ℓ10b
ℓ6b
25
ℓ10a
30
SW2
L2
RECTIFIER
HSW
DIAL PULSE SENDING
L2a L2b
l8a
SW2a
C3
MJ 2
ℓ9a
DP
AD2
CALLING SIGNAL DETECTION CIRCUIT
DIAL CIRCUIT
DTMF
SPEECH CIRCUIT
SW2b
R3
37
HOOK DETECTION CIRCUIT
28
29
MJ2
ℓ8b
ℓ9b
OPERATION PANEL
HD2
23
BELL SOUND GENERATION CIRCUIT
24
ℓ15
DIAL KEYS
40
26
27
ℓ14
ℓ13b
ℓ13a

Fig. 3

SW1
ℓ5a
SW1a
ℓ7a
ℓ5b
SW1b
ℓ7b
ℓ6a
ℓ6b

Fig. 4
START
S1
FACSIMILE TRANSMISSION IS INTENDED?
YES
NO
S2
TRANSMISSION OF TELEPHONE CALL IS INTENDED?
S3
FACSIMILE CALL IS RECEIVED ?
S4
TELEPHONE CALL IS RECEIVED ?
S5
DIALLING OPERATION
S6
LINE CONNECTION
S7
PRESS START BUTTON
S8
START FACSIMILE TRANSMISSION
S9
LINE CONNECTION
S10
START FACSIMILE RECEPTION
S11
TRANSMISSION OF TELEPHONE CALL IS INTENDED?
S12
DIALLING OPERATION
S13
RESPNSE
S14
LINE CONNECTION
S15
TELEPHONE CALL IS RECEIVED ?
S16
BELL SOUND GENERATION
S17
LINE CONNECTION
S18
DIALLING OPERATION
S19
LINE CONNECTION
S20
START TELEPHONIC COMMUNICATION
S21
FACSIMILE CALL IS RECEIVED
S22
LINE CONNECTION
S23
START FACSIMILE RECEPTION
1
2
3
4
5
6